# EUROPEAN PATENT APPLICATION

(11) **EP 1 088 617 A1**
(43) Date of publication of application: **04.04.2001**
(21) Application number: 00250325.8
(22) Date of filing: 28.09.2000
(51) Int. Cl.: B23Q 1/62, F16H 19/06, B25J 9/10

(54) **Object moving system and method of using the same**

(30) Priority: 28.09.1999 US 407498
(71) Applicant: Ocean Machinery Co., Ltd., Chiisagata-County, Nagano-Pref. (JP)
(72) Inventor: Yoshiaki, Arai, Ueda-city, Nagana-prefecture (JP); Shinji, Ishii, Tsura-city, Yamanashi-prefecture (JP)
(74) Representative: Wablat, Wolfgang, Dr.Dr.

(57) **Abstract**

An object moving system (60) having a frame (62), an object movement imparting assembly (76) having at least a first part (78) through which an object (68) can be moved and a second part (80), a plurality of pulleys (122,124,126,128,130) on the object movement imparting assembly, first and second drives (104,106) each selectively operable in forward and reverse directions, and an elongate drive element (112). The object movement imparting assembly is guided selectively in first and second opposite directions (82,84) in first and second paths relative to the frame. The first part of the object movement imparting assembly is guided selective in third and fourth opposite directions (86,88) in third and fourth paths relative to the second part of the object movement imparting assembly. The first and second paths are transverse to the third and fourth paths, respectively. The elongate drive element is trained around the plurality of pulleys and operably connected to the first and second drives so that simultaneous operation of the first and second drives and variation of the drive directions of the first and second drives allows the elongate drive element to be moved so as to cause the object movement imparting assembly to move in the first and second paths and the first part of the object movement imparting assembly to move in the third and fourth paths to thereby controllably reposition an object through the first part of the object movement imparting assembly.

## Description

### BACKGROUND OF THE INVENTION

### FIELD OF THE INVENTION

This invention relates to a system for moving an object, such as a workpiece on which a processing step is to be performed and, mote particularly, to an object moving system having the capability of moving an object, or causing an object to be moved, in two transverse paths.

### BACKGROUND ART

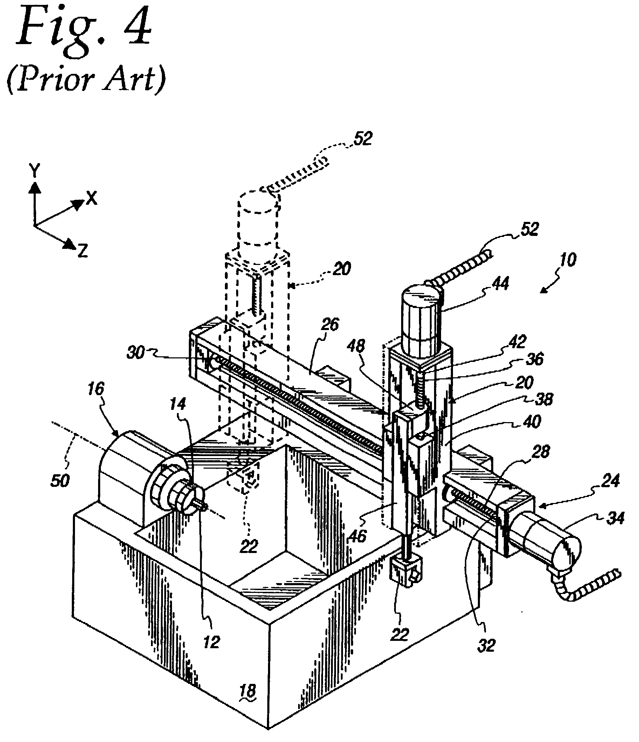

In Fig. 4, a conventional system is shown at 10 for moving objects, and in this case individual workpieces 12, to and from a spindle assembly 14 on a machine tool 16 supported on a frame 18. The system 10 is designed to move the individual workpieces 12 along Y and Z axes.

A secondary feed mechanism 20 has a workpiece holder 22 that is selectively, guidingly movable in a linear path along the Y axis. The secondary feed mechanism 20 is carried on a primary feed mechanism 24, which is operable to move the secondary feed mechanism 20 in a linear path back and forth along the Z axis.

More specifically, the frame 18 has an elongate rail 26 which guides the feed mechanism 20 along the Z axis. The primary feed mechanism 24 consists of an elongate, threaded rod 28 having one end 30 journalled for rotation in the frame 18 and an opposite end 32 supported for rotation on the frame 18 and driven in rotation around the Z axis by a motor 34. The threaded rod 28 extends through a complementarily-threaded ball element (not shown) on the secondary feed mechanism 20. As the motor 34 rotates the threaded rod 28 in one direction, the ball, and thus the secondary feed mechanism 20 to which the ball is attached, moves in one direction along the Z axis. Reverse rotation of the threaded rod 28 by the motor 34 effects an opposite Z axis movement of the secondary feed mechanism 20.

The secondary feed mechanism 20 likewise employs an elongate, threaded rod 36 the length of which extends parallel to the Y axis. One end 38 of the threaded rod 36 is journalled for rotation in a subframe 40. The opposite end 42 is supported on the subframe 40 for rotation and is driven by a motor 44 on the subframe 40 around the Y axis. A workpiece holder support 46 is mounted for guided movement relative to the subframe 40 parallel to the Y axis. The threaded rod 36 is threadably mated with a ball mechanism on an arm 48 on the workpiece holder support 46. Rotation of the threaded rod 36 by the motor 44 in one direction causes the workpiece holder support 46 and workpiece holder 22 carried thereby to advance downwardly along the Y axis. Reverse rotation of the threaded rod 36 causes the workpiece holder support 46 to be raised relative to the subframe 40 along the Y axis.

Rack and pinion mechanisms and pneumatic cylinders are used for this same purpose in place of the threaded rods 28, 36 and cooperating ball mechanisms.

By coordinating operation of the motors 34, 44, both by speed and directional control, workpieces 12 can be advanced into coaxial relationship with the axis 50 of the spindle assembly 14, which is parallel to the Z axis, and thereafter advanced along the Z axis to insert a workpiece 12 into an operative position on the spindle assembly 14. By reversing these steps, workpieces 12 can be removed from the spindle assembly 14 and directed to a desired point of use. The motors 34, 44 can be operated independently for pure Y or Z axis movement or simultaneously to have a combined Y and Z axis movement of the workpieces 12.

While the system 10 shown operates generally satisfactorily for its intended purposes, it has a number of inherent drawbacks. One significant drawback is attributable to the fact that the motor 44 travels along the Z axis together with the secondary feed mechanism 20. A power supply line 52 to the motor 44, be it electrical, hydraulic, or the like, is required to follow movement of the motor 44 along the Z axis.

If the required range of movement of the secondary feed mechanism 20 is large, the supply line 52 must have a length and be constructed and configured to accommodate this motion. The possibility of tangling of the supply tine 52, in the event that it is flexible, thus exists. Further, if the supply line 52 is flexible, repeated flexing may cause damage, or ultimately a failure in the supply line 52.

Also, the threaded rod 28 must be made long enough to accommodate the full range of motion of the secondary feed mechanism 20. Depending upon the length of the threaded rod 28, it may be required to have a relatively large diameter. Alternatively, flexing of the threaded rod 28 could result in bending, which could cause jamming or permanent deformation of the rod 28 and potential breakage thereof. This could result in down time for the system 10, to permit necessary repair and/or adjustments.

Another problem with the system 10 is that each motor 34, 44 is required to independently operate without any assistance from the other. That is, the motor 34 is solely responsible for advancing the feed mechanism 20 along the Z axis, whereas the motor 44 is solely responsible for advancing the workpiece holder support 46 along the Y axis. A large capacity motor may be required, particularly in advancing the feed mechanism 20.

If the range of movement of the secondary feed mechanism 20 and/or workpiece holder support 46 is required to be extended, the structure for additional added range capacity may account for significant added weight which must be accommodated by the motors 34, 44. This may require a significant increase in the capacity of the motor 34 as well as an increase in the expense in both manufacturing and operating the system 10.

### SUMMARY OF THE INVENTION

In one form, the invention is directed to an object moving system having a frame, an object movement imparting assembly having at least a first part through which an object can be moved and a second part, a plurality of pulleys on the object movement imparting assembly, first and second drives each selectively operable in forward and reverse directions, and an elongate drive element. The object movement imparting assembly is guided selectively in first and second opposite directions in first and second paths relative to the frame. The first part of the object movement imparting assembly is guided selective in third and fourth opposite directions in third and fourth paths relative to the second part of the object movement imparting assembly. The first and second paths are transverse to the third and fourth paths, respectively. The elongate drive element is trained around the plurality of pulleys and operably connected to the first and second drives so that simultaneous operation of the first and second drives and variation of the drive directions of the first and second drives allows the elongate drive element to be moved so as to cause the object movement imparting assembly to move in the first and second paths and the first part of the object movement imparting assembly to move in the third and fourth paths to thereby controllably reposition an object through the first part of the object movement imparting assembly.

The first drive may be mounted fixedly to the frame so that the first drive does not follow movement of the object movement imparting assembly in the first and second paths.

Both of the first and second drives may be mounted fixedly to the frame so that neither follows movement of the object movement imparting assembly in the first and second paths.

The elongate drive element may be a single flexible belt.

In one form, the elongate drive element has first and second ends each fixedly connected to the first part of the object movement imparting assembly.

In one form, the first and second paths are substantially straight and in a first line and the third and fourth paths are substantially straight and in a second line, with the first and second lines being transverse to each other. The first and second lines may be orthogonal to each other.

In one form, the plurality of pulleys includes four freely rotatable pulleys on the object movement imparting assembly at which the flexible belt changes directions four times as the flexible belt is moved.

In one form, operation of the first and second drives in the forward direction for the first and second drives causes the object movement imparting assembly to move in the first direction in the first path. Operation of the first and second drives in the reverse direction for the first and second drives causes the object movement imparting assembly to move in the second direction in the second path. Operation of the first drive in the forward direction for the first drive and the second drive in the reverse direction for the second drive causes the first part of the object movement imparting assembly to move in the third direction in the third path relative to the second part of the object movement imparting assembly. Operation of the first drive in the reverse direction for the first drive and the second drive in the forward direction for the second drive causes the first part of the object movement imparting assembly to move in the fourth direction in the fourth path relative to the second part of the object movement imparting assembly.

Each of the first and second drives may be a motor with a shaft that is rotatable in opposite directions corresponding to forward and reverse directions of operation for the first and second drives.

The object moving system may further include an object carried on the first part of the object moving assembly.

In one form, the object is a workpiece on which a processing operation is to be performed and which is transferable through the object moving system to and from a processing device.

The invention is further directed to the combination of an object moving system, as claimed above, with an object carried on the first part of the object movement imparting assembly, and a processing device for performing a processing step on the object carried on the first part of the object movement imparting assembly.

The invention is also directed to an object moving system having a frame, an object movement imparting assembly having at least a first part through which an object can be moved and a second part, first and second drives each selectively operable in forward and reverse directions, and at least one elongate drive element. The object movement imparting assembly is guided in first and second opposite directions in first and second paths relative to the frame. The first part of the object movement imparting assembly is guided selectively in third and fourth opposite directions in third and fourth paths relative to the second part of the object movement imparting assembly. The first and second drives, at least one elongate drive element, and object movement imparting assembly are interconnected so that a) operation of the first and second drives in a first combination of forward and reverse directions causes the first and second drives to move the at least one elongate drive element so as to move the object movement imparting assembly in one of the first and second paths and b) operation of the first and second drives in a second combination of forward and reverse directions causes the first and second drives to move the at least one elongate drive element so as to move the first part of the object movement imparting assembly in one of the third and fourth paths relative to the second part of the object movement imparting assembly.

The invention is also directed to a method of moving an object including the steps of: providing a frame, an object movement imparting assembly having at least a first part through which an object can be moved and a second part, a plurality of pulleys, an elongate flexible drive element trained around the pulleys, first and second drives for the elongate flexible drive element with each of the first and second drives operable in forward and reverse directions; selectively operating the first and second drives to move the elongate flexible drive element to a) move the object movement imparting assembly in a first path with the first and second drives operating in a first combination of forward and reverse directions and b) move the first part of the object movement imparting assembly relative to the second part of the object movement imparting assembly in a second path that is transverse to the first path as an incident of the first and second drives being operated in a second combination of forward and reverse directions that is different than the first combination of forward and reverse directions.

### BRIEF DESCRIPTION OF THE DRAWINGS

Fig. 1 is a perspective view of an object moving system according to the present invention;
Fig. 2 is a plan view of the object moving system of Fig. 1;
Fig. 3 is a fragmentary, side elevation view of the object moving system of Figs. 1 and 2; and
Fig. 4 is a perspective view of a conventional object moving system.

### DETAILED DESCRIPTION OF THE DRAWINGS

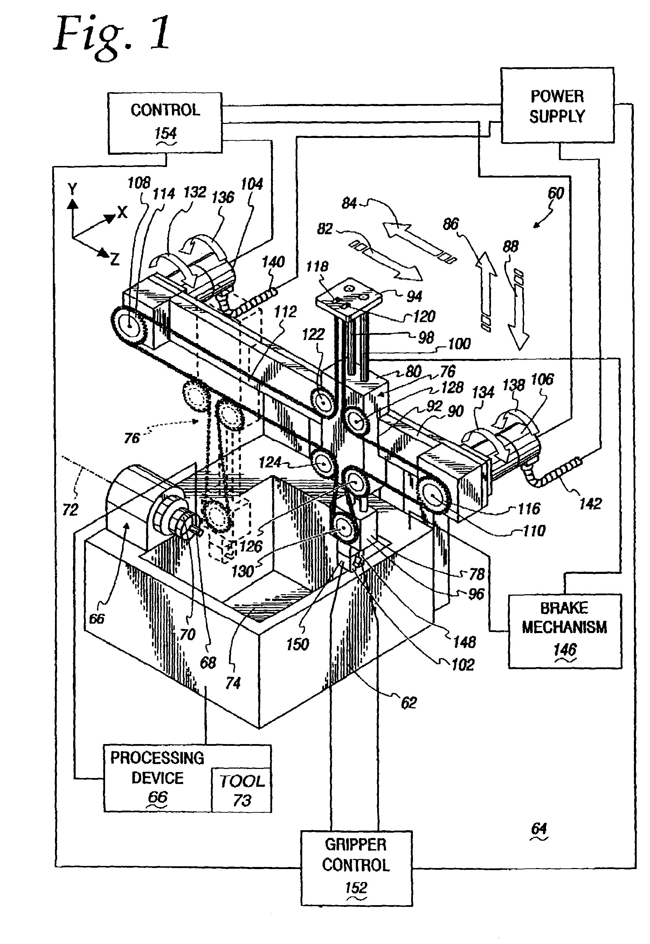

In Figs. 1-3, an object moving system, according to the present invention, is shown at 60. The object moving system 60 consists of a frame 62 through which the overall system 60 is supported on a subjacent surface 64.

The frame 62 also supports a processing device at 66 for performing the processing step on a workpiece/object 68. In this case, the processing device 66 includes a spindle 70 that receives the workpiece/object 68 and is rotatable about an axis 72, that is parallel to the Z axis. As the workpiece/object 68 is rotated, a tool 73, of any conventional construction, can be used to perform a processing step on the workpiece/object 68. The distal end of the spindle 70 projects over a receptacle 74 within which shavings and particulate removed from a particular workpiece/object 68 can be accumulated during the processing operation.

Between processing steps, workpieces/objects 68 are transferred from the spindle 70 to a desired point of use, which may be a further processing station or an accumulation area. A separate workpiece/object 68 is then placed in the spindle 70 for performance of a processing step thereon. The precise nature of the processing is not pertinent to the present invention. Instead, the present invention is concerned with the transfer of workpieces/objects 68 to and from the spindle 70.

To accomplish this, the object moving system 60 includes an object movement imparting assembly at 76 having a first part 78 through which a workpiece/object 68 can be moved, and a second part 80. The object movement imparting assembly 76, including the first and second parts 78, 80, is movable guidingly selectively in a first direction, as indicated by the arrow 82, along the Z axis in a first path, and oppositely in a second direction, indicated by the arrow 84, in a second path relative to the frame 62.

The first part 78 of the object movement imparting assembly 76 is guided relative to the second part 80 of the object movement imparting assembly 76 for movement selectively in a third direction, as indicated by the arrow 86, in a third path along the Y axis, and in a fourth direction, as indicated by the arrow 88, oppositely to the fourth direction in a third path, along the Y axis relative to the second part 80. In this case, the first and second paths reside in a first line, with the third and fourth paths residing in a second line, with the first and second lines being orthogonal to each other.

More particularly, the frame 62 has an elongate rail 90 which determines the range of movement of the object movement imparting assembly 76. The rail 90 has a rectangular cross-sectional configuration. The second part 80 has an undercut 92 that is complementary to the cross section of the rail 90 between the top and bottom. The undercut 92 closely receives the rail 90. Through this arrangement, guided movement of the second part 80 along the rail 90 in the Z axis direction is facilitated.

The first part 78 consists of a top plate 94 and a bottom block 96 fixedly joined by spaced, parallel, vertically extending rods 98, 100. The top plate 94, bottom block 96, and rods 98, 100 move together as a unit, i.e. vertically as one piece. The rods 98, 100 slide guidingly vertically through the second part 80 parallel to the Y axis. The bottom block 96 carries a workpiece/object support 102.

With this arrangement, the object movement imparting assembly 76, including the first and second parts 78, 80, is movable guidingly along the Z axis. At the same time, or, in a separate step, the first part 78 can be guidingly moved vertically relative to the second part 80 along the Y axis. Between the Y and Z axis movement, workpieces/objects 68 can be moved to and from a transition location 76, as shown in phantom lines, in which position the workpieces/objects 68 can be directed into and removed from the spindle 70 by a Z axis movement relative to the spindle 70. Through manipulation of the first and second parts 78, 80, finished workpieces/objects 68 can be serially directed to a desired point of use with another workpiece/object 68 picked up and manipulated so as to be placeable in the spindle 70 for processing thereof.

Movement of the object movement imparting assembly 76, as a whole, i.e. including the first and second parts 78, 80, and movement of the first part 78 relative to the second part 80, is accomplished through first and second drives 104, 106, which may be electric motors, hydraulic motors, pneumatic motors, or the like, with the drives 104, 106 each being operable in forward and reverse directions. The drives 104, 106 each have an associated shaft 108, 110, respectively, which is driven in rotation thereby in the forward or reverse direction.

Movement of the object movement imparting assembly 76 as a whole, and the first part 78 relative to the second part 80, is effected cooperatively by the drives 104, 106 through an elongate drive element 112, which could be a flexible chain, wire, rope, timing belt, or the like. The shaft 108 carries a pulley 114 that is frictionally engaged with, or otherwise keyed to the elongate drive element 112 so that rotation of the drive pulley 114 through the drive 104 effects corresponding advancing movement of the elongate drive element 112. The shaft 110 has a corresponding pulley 116 driven by the drive 106 to in turn advance the elongate drive element 112.

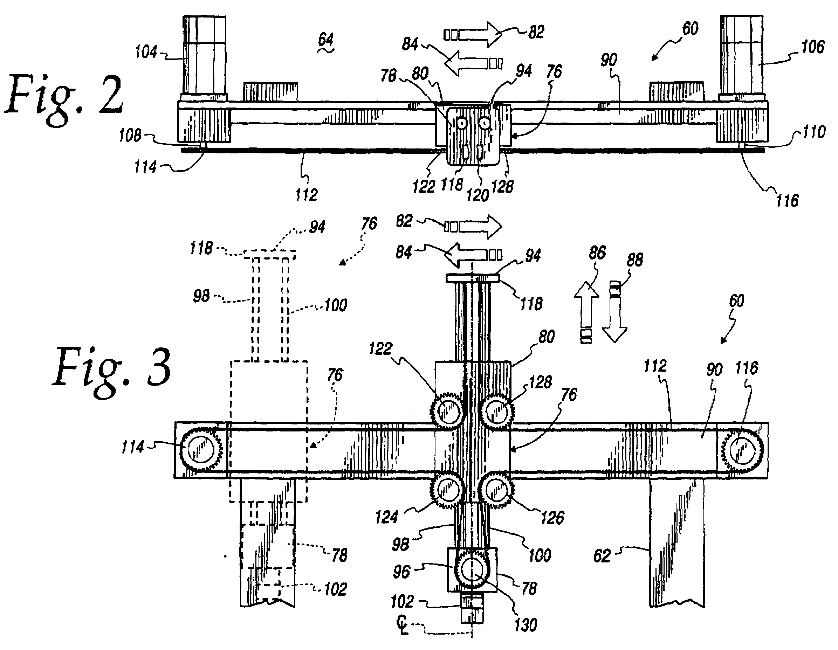

The elongate drive element 112 has spaced ends 118, 120 fixedly mounted to the top plate 94. Between the ends 118, 120, the elongate drive element 112 is trained around a) four freely rotatable pulleys 122, 124, 126, 128 mounted upon the second part 80 of the object movement imparting assembly 76, b) a freely rotatable pulley 130 on the bottom block 96 on the first part 78, and c) the two drive pulleys 114, 116. Fewer, or more, than four freely rotatable pulleys 122, 124, 126, 128 could be used. The wrapping pattern of the elongate drive element 112 is symmetrical about a vertical center line CL in Fig. 3.

From the end 118, the elongate drive element 112 wraps around the pulley 122, effecting a 90° change in direction from vertical to horizontal, wraps around the pulley 114 to effect a 180° change in direction, wraps around the pulley 124 to change directions through slightly less than 90° from horizontal to vertical, and around the pulley 130 to change directions approximately 180°. In addition to changing the direction of movement of the elongate drive element 12, the pulleys 122, 124, 126, 128 maintain tension on the elongate drive element 112 as it is advanced in the various operating modes described herein.

By using different combinations of forward and reverse rotational directions for the drives 104, 106, the length of the elongate drive element 112 between the pulleys 114, 116, 122, 124, 126, 128, 130 and the top plate 94 is varied in such a manner that a) the object movement imparting assembly 76 can be controllably moved in the first and second paths along the Z axis and b) the first part 78 can be controllably moved in the third and fourth paths relative to the second part 80 along the Y axis.

More specifically, simultaneous rotation of the pulleys 114, 116 at the same rotational velocity in a forward direction, as indicated by the arrows 132, 134, tensions the elongate drive element 112 between the pulley 114, 124 and the pulleys 116, 126 and thereby causes the second part 80 to move in the direction of the arrow 82 along the Z axis. Rotation of the pulleys 114, 116 in the reverse direction, as indicated by the arrows 136, 138, at the same rotational velocity, tensions the elongate drive element 112 between the pulleys 114, 122 and the pulleys 116, 128 and thereby causes the second part 80 to move in the direction of the arrow 84 along the Z axis. Rotation of the pulley 114 in the reverse direction, as indicated by the arrow 136, while rotating the pulley 116 in the forward direction, as indicated by the arrow 134, at the same rotational velocity, tensions the elongate drive element 112 between the pulleys 114, 122 and the pulleys 116, 128 and thereby causes the first part 78 to be advanced in the direction of the arrow 88 along the Y axis, i.e. downwardly, relative to the second part 80. Rotation of the pulley 114 in the forward direction, as indicated by the arrow 132, while rotating the pulley 116 in the reverse direction, as indicated by the arrow 138, at the same rotational velocity, tensions the elongate drive element 112 between the pulleys 114, 124 and the pulleys 116, 126 and thereby causes the first part 78 to move in the direction of the arrow 86 relative to the second part 80, i.e. upwardly.

While pure Y and Z axis movement can be effected, as described above, by operating the drives 104, 106 at the same rotational velocities, a combination of Y and Z axis movement can be effected by rotating the drives 104, 106 as described above but a different rotational velocities.

In the embodiment, shown, the drives 104, 106 are fixed to the frame 62, though they need not be. In this fixed relationship, the length of supply lines 140, 142 to the drives 104, 106, be they electrical, pneumatic, hydraulic, etc., can be made without slack between the drives 104, 106 and the power supply. No accommodation need be made for flexing. Consequently, the life of the supply line 140, 142 would not necessarily be effected by the repetitive operation of the system 60.

Additionally, the drives 104, 106 are simultaneously operated to cooperatively effect movement of the object movement imparting assembly 76 and the first part 78 thereof relative to the second part 80 thereof. As a result, the size and capacity of the drives 104, 106 can be reduced over what they would be if each was independently required to move the object movement imparting assembly 76 and the first part 78 relative to the second part 80.

While the first part 78 is shown to directly carry a workpiece/object 68, the inventive concept can be used to impart two-dimensional movement to an intermediate mechanism to effect movement of an object in the same or a different environment. The system 60 can be used as a transfer system, a pick-and-place system, a workpiece loader, etc.

The system is also capable of operating in different modes than those described above. For example, either of the pulleys 114, 116 could be driven independently in the forward and reverse directions without operating the other.

A brake mechanism 146 may be provided on the second part 80 of the object moving imparting assembly to limit vertical movement of the first part 78 relative to the frame 62. With the brake mechanism 146 engaged, and without activating the drives 104, 106, an operator can, by hand, shift the object movement imparting assembly 76 along the Z axis.

The workpiece/object support 102 is shown to have a pair of cooperating grippers 148, 150, which are movable selectively towards and away from each other to grip and release a workpiece/object 68. An independent gripper control 152 may be provided to move the grippers 148, 150 selectively towards and away from each other Alternatively, through a central control 154, the movement of the grippers 148, 150 can be coordinated in a predetermined manner with the movement of the object movement imparting assembly 76 relative to the frame 62 and the first part 78 relative to the second part 80. The gripper control 152 can be electric, pneumatic, or any other control well known to those skilled in the art.

To increase the capacity of the system 60 i.e. to change the range of movement of the first and second parts 70, 80, the length of the rail 90 and/or rods 98, 100 may be changed without a corresponding change to the elongate drive element 112 and potentially without drastically changing the complexity or weight of the system or significantly affecting manufacturing costs.

The foregoing disclosure of specific embodiments is intended to be illustrative of the broad concepts comprehended by the invention.

## Claims

1. An object moving system comprising:
a frame;
an object movement imparting assembly having at least a first part through which an object can be moved and a second part,
the object movement imparting assembly being guided selectively in first and second opposite directions in first and second paths relative to the frame,
the first part of the object movement imparting assembly being guided selectively in third and fourth paths relative to the second part of the object movement imparting assembly,
the first and second paths being respectively transverse to the third and fourth paths;
a plurality of pulleys on the object movement imparting assembly;
a first drive selectively operable in forward and reverse directions;
a second drive selectively operable in forward and reverse directions; and
an elongate drive element trained around the plurality of pulleys and operably connected to the first and second drives so that simultaneous operation of the first and second drives and variation of the drive directions of the first and second drives allows the elongate drive element to be moved so as to cause the object movement imparting assembly to move in the first and second paths and the first part of the object movement imparting assembly to move in the third and fourth paths relative to the second part of the object movement imparting assembly to thereby controllably reposition an object through the first part of the object movement imparting assembly.

2. The object moving system according to claim 1 wherein the first drive is mounted fixedly to the frame so that the first drive does not follow movement of the object movement imparting assembly in the first and second paths.

3. The object moving system according to claim 1 wherein the first and second drives are both mounted fixedly to the frame so that neither of the first and second drives follows movement of the object movement imparting assembly in the first and second paths.

4. The object moving system according to claim 1 wherein the elongate drive element comprises a single flexible belt.

5. The object moving system according to claim 4 wherein the elongate drive element has first and second ends each fixedly connected to the first part of the object movement imparting assembly.

6. The object moving system according to claim 1 wherein the first and second paths are substantially straight and in a first line, the third and fourth paths are substantially straight and in a second line, and the first and second lines are transverse to each.

7. The object moving system according to claim 6 wherein the first and second lines as are orthogonal to each other.

8. The object moving system according to claim 4 wherein the plurality of pulleys comprises four freely rotatable pulleys on the object movement imparting assembly at which the flexible belt changes directions four times as the flexible belt is moved.

9. The object moving system according to claim 1 wherein: a) operation of the first and second drives in the forward direction for the first and second drives causes the object movement imparting assembly to move in the first direction in the first path; b) operation of the first and second drives in the reverse direction for the first and second drives causes the object movement imparting assembly to move in the second direction in the second path; c) operation of the first drive in the forward direction for the first drive and the second drive in the reverse direction for the second drive causes the first part of the object movement imparting assembly to move in the third direction in the third path relative to the second part of the object movement imparting assembly; and d) operation of the first drive in the reverse direction for the first drive and the second drive in the forward direction for the second drive causes the first part of the object movement imparting assembly to move in the fourth direction in the fourth path relative to the second part of the object movement imparting assembly.

10. The object moving system according to claim 4 wherein each of the first and second drives comprises a motor with a shaft that is rotatable in opposite directions corresponding to forward and reverse directions of operation for the first and second drives.

11. The object moving system according to claim 1 further comprising an object carried on the first part of the object movement imparting assembly.

12. The object moving system according to claim 11 wherein the object is a workpiece on which a processing operation is to be performed and which is transferable through the object movement system to and from a processing device.

13. In combination:
a) an object moving system comprising:
a frame;
an object movement imparting assembly having at least a first part through which an object can be moved and a second part,
the object movement imparting assembly being guided selectively in first and second opposite directions in first and second paths relative to the frame,
the first part of the object movement imparting assembly being guided selectively in third and fourth paths relative to the second part of the object movement imparting assembly,
the first and second paths being respectively transverse to the third and fourth paths;
a plurality of pulleys on the object movement imparting assembly;
a first drive selectively operable in forward and reverse directions;
a second drive selectively operable in forward and reverse directions; and
an elongate drive element trained around the plurality of pulleys and operably connected to the first and second drives so that simultaneous operation of the first and second drives and variation of the drive directions of the first and second drives allows the elongate drive element to be moved so as to cause the object movement imparting assembly to move in the first and second paths and the first part of the object movement imparting assembly to move in the third and fourth paths relative to the second part of the object movement imparting assembly to thereby controllably reposition an object through the first part of the object movement imparting assembly;
b) an object carried on the first part of the object movement imparting assembly; and
c) a processing device for performing a processing step on the object carried on the first part of the object movement imparting assembly.

14. The combination according to claim 13 wherein the first drive is mounted fixedly to the frame so that the first drive does not follow movement of the object movement imparting assembly in the first and second paths.

15. The combination according to claim 13 wherein the first and second drives are both mounted fixedly to the frame so that neither of the first and second drives follows movement of the object movement imparting assembly in the first and second paths.

16. The combination according to claim 13 wherein the elongate drive element comprises a single flexible belt.

17. The combination according to claim 16 wherein the elongate drive element has first and second ends each fixedly connected to the first part of the object movement imparting assembly.

18. The combination according to claim 16 wherein each of the first and second drives comprises a motor with a shaft that is rotatable in opposite directions corresponding to forward and reverse directions of operation of the first and second drives.

19. An object moving system comprising:
a frame;
an object movement imparting assembly having at least a first part through which an object can be moved and a second part,
the object movement imparting assembly guided in first and second opposite directions in first and second paths relative to the frame,
the first part of the object movement imparting assembly guided selectively in third and fourth opposite directions in third and fourth paths relative to the second part of the object movement imparting assembly;
a first drive selectively operable in forward and reverse directions;
a second drive selectively operable in forward and reverse directions; and
at least one elongate drive element,
the first and second drives, at least one elongate drive element, and object movement imparting assembly interconnected so that a) operation of the first and second drives in a first combination of forward and reverse directions causes the first and second drives to move the at least one elongate drive element so as to move the object movement imparting device in one of the first and second paths and b) operation of the first and second drives in a second combination of forward and reverse directions causes the first and second drives to move the at least one elongate drive element so as to move the first part of the object movement imparting assembly in one of the third and fourth paths relative to the second part of the object movement imparting assembly.

20. A method of moving an object, the method comprising the steps of:
providing: a frame; an object movement imparting assembly having at least a first part through which an object can be moved and a second part; a plurality of pulleys; an elongate flexible drive element trained around the pulleys; and first and second drives for the elongate flexible drive element with each of the first and second drives operable in forward and reverse directions;
selectively operating the first and second drives to move the elongate flexible drive element to a) move the object movement imparting device in a first path with the first and second drives operated in a first combination of forward and reverse directions and b) move the first part of the object movement imparting assembly relative to the second part of the object movement imparting assembly in a second path that is transverse to the first path as an incident of the first and second drives being operated in a second combination of forward and reverse directions that is different than the first combination of forward and reverse directions.

21. The method of moving an object according to claim 19 wherein the step of selectively operating the first and second drives comprises the steps of maintaining the first and second drives on the frame so that the first and second drives do not follow movement of either the object movement imparting device in the first path or the first part in the second path.
